# EUROPÄISCHE PATENTSCHRIFT

(11) **EP 2 207 866 B1**
(45) Veröffentlichungstag und Bekanntmachung des Hinweises auf die Patenterteilung: **21.11.2012**
(21) Anmeldenummer: 08850966.6
(22) Anmeldetag: 14.10.2008
(51) Int. Cl.: C09K 11/77, C09K 11/68, C09K 11/80, C09K 11/59

(54) **BESCHICHTETE LEUCHTSTOFFPARTIKEL MIT BRECHUNGSINDEX-ANPASSUNG**
COATED PHOSPHOR PARTICLES WITH REFRACTIVE INDEX ADAPTION
PARTICULES REVÊTUES PAR UNE SUBSTANCE LUMINEUSE AVEC ADAPTATION DE L'INDICE DE RÉFRACTION

(30) Priorität: 12.11.2007 DE 102007053770
(43) Veröffentlichungstag der Anmeldung: 21.07.2010
(73) Patentinhaber: Merck Patent GmbH, 64293 Darmstadt (DE)
(72) Erfinder: WINKLER, Holger, 64291 Darmstadt (DE); RUEGER, Reinhold, 63322 Rödermark (DE)
(86) Internationale Anmeldenummer: PCT/EP2008/008685
(87) Internationale Veröffentlichungsnummer: WO 2009/062579

(56) Entgegenhaltungen:
- EP-A- 0 415 469
- EP-A- 0 763 573
- EP-A- 1 350 829
- WO-A-98/37165
- WO-A1-2008/058618
- WO-A1-2009/059677
- DE-A1-102007 001 903
- US-A- 6 150 757
- US-A1- 2004 166 320
- US-A1- 2006 152 139
- US-A1- 2007 278 935
- US-A1- 2008 003 160

## Beschreibung

Die Erfindung betrifft beschichtete Leuchtstoffpartikel mit verbesserter Brechzahl sowie ein Verfahren zur deren Herstellung.

LED-Konversionsleuchtstoffe, wie YAG:Ce, TAG:Ce, Al₂O₃:Ce etc. sind beispielsweise aus US 2006/0152139 bekannt und besitzen im Allgemeinen eine hohe Brechzahl von ca. 1,8 und darüber. In der LED befinden sich die Leuchtstoffe meist eingebettet in einem Bindemittel (üblicherweise Silikon- oder Epoxidharz); diese Mischung stellt die Konversionsschicht dar. Die Bindemittel weisen eine Brechzahl innerhalb eines Bereiches von 1,4 bis 1,5 auf. Der Sprung der Brechzahl zwischen Bindemittel und Leuchtstoff von 0,4 Einheiten führt dazu, dass ein beträchtlicher Anteil des Lichtes in der Konversionsschicht an der Grenzfläche Bindemittel / Leuchtstoff gestreut wird. Dies bezieht sich insbesondere sowohl auf die Lichteinkopplung, d. h. das Licht des LED-Chips, welches den Leuchtstoff anregen soll, als auch auf die Auskopplung, d. h. das Fluoreszenzlicht, welches innerhalb des Leuchtstoffes entsteht und von diesem emittiert werden soll. Insgesamt betrachtet bewirkt der große und abrupte Brechzahl-Sprung eine Verringerung der Konversionseffizienz, da weniger Anregungslicht mit dem Leuchtstoff in Form von Absorption wechselwirkt. Des Weiteren wird auf dieselbe Weise das im Leuchtstoff erzeugte Fluoreszenzlicht durch Totalreflektion darin behindert, aus dem Leuchtstoff auszukoppeln.

Im ungünstigsten Falle wird das im Inneren totalreflektierte Licht an Fehlstellen absorbiert und in Wärme umgewandelt und steht somit nicht mehr für eine später erfolgende ausgekoppelte Fluoreszenzstrahlung zur Verfügung. Dadurch wird die Effizienz des Leuchtstoffes abermals verringert.

Um diese nachteiligen, die Effizienz des Gesamtsystems verschlechternden Erscheinungen zu verringern, muss der Brechzahlunterschied an der Grenzfläche zwischen Bindemittel und Leuchtstoff verringert oder zumindest nicht stufenförmig, sondern allmählich übergehend gestaltet werden.

Dem Stand der Technik entsprechend wird versucht, die Brechzahl der Bindemittel zu erhöhen, indem diesen farblose Feinstpartikel hinzugefügt werden, welche über eine hohe Brechzahl verfügen. Da jedoch die resultierende effektive Brechzahl des Bindemittels sich dann durch die Summe der volumetrisch gemittelten Brechzahlen aus dem Bindemittel und den hochbrechenden Feinstpartikeln ergibt, ist nur eine ungenügend geringe Erhöhung der Brechzahl möglich. Dies trifft umso mehr zu, als auch die Konzentration der zugesetzten Feinstpartikel nicht beliebig erhöht werden kann, weil es sonst zu einer nachteiligen Veränderung der Verarbeitungseigenschaften des Bindemittelgemisches kommt.

Eine weitere Möglichkeit zur Erhöhung der Brechzahl des Bindemittels besteht darin, spezielle funktionelle Gruppen z. B. in das Silikongerüst zu integrieren, insbesondere Aromaten. Dies erweist sich aber als nachteilig, weil die derart modifizierten Silikone eine geringere Strahlungs- und Temperaturbeständigkeit aufweisen, als unmodifizierte Silikone. Für den Einsatz in Hochleistungs-LEDs können derart modifizierte Bindemittel nicht herangezogen werden, weil es bereits nach wenigen hundert Betriebsstunden zu einer Degradation des Bindemittels kommen kann, was sich in Form einer Vergrauung bemerkbar machen kann. Dies widerspricht den langen Lebensdauern des LED-Chips von bis zu 100.000 Betriebsstunden.

Aus US 2007/0036988 ist eine Glasbeschichtung von einer Keramik enthaltend Leuchtstoffpartikeln bekannt, wobei die Leuchtstoffpartikel eine Partikelgröße zwischen 50 und 250 nm, vorzugsweise 150 µm besitzen. Die Leuchtstoffpartikel werden mittels herkömmlicher Festkörpersynthese ("mixing and firing") hergestellt.

Aus US 5220243 ist eine Beschichtung von ZnS-basierenden Leuchtstoffpartikeln bekannt, wobei die Beschichtung aus Trimethyl- oder Triethylaluminium besteht und über ein CVD-Verfahren (chemical vapor deposition) auf die Leuchtstoffpartikel gebracht wird. CVD Verfahren sind verfahrenstechnisch und apparatetechnisch sehr aufwändig: Es sind sehr hohe Reinheiten der (inerten) Gasatmosphäre über den gesamten Prozess erforderlich und die strömungstechnische Auslegung muss derart erfolgen, dass eine homogene Zuführung der einzelnen Gasströme an das zu beschichtende Material erfolgen kann.

Weitere allgemeine Prinzipien zur Beschichtung von Leuchtstoffen sind beispielsweisen aus den Druckschriften US 2004/166320 A1, US 6,150,757 A, EP 1 350 829 A, EP 0 763 573 A und WO 2008/059677 A1 bekannt.

Die Aufgabe der vorliegenden Erfindung bestand nun darin, eine Verbesserung der Lichtein- und -auskopplung in und aus dem Leuchtstoff zu erzielen, ohne andere Eigenschaften, wie z. B. die Lebensdauer des LED-Systems zu verschlechtern.

Überraschenderweise wird die Aufgabe dadurch gelöst, indem ein Leuchtstoff in einem nasschemischen Verfahren mit einer anorganischen Beschichtung in ein neues Leuchtstoffmaterial überführt wird, welche die Ein- und Auskopplung von Licht verbessert. Im einfachsten Fall ist dies eine poröse Beschichtung mit einem Material mittlerer oder hoher Brechzahl.

Gegenstand der vorliegenden Erfindung sind somit beschichtete Leuchtstoffpartikel mit poröser Oberfläche aus Meso- und/oder Makroporen enthaltend lumineszierende Teilchen aus Y₃Al₅O₁₂:Ce, (Ca, Sr, Ba)₂Si₅N₈:Eu oder (Ca, Sr, Ba)SiN₂:Eu und mindestens einer Beschichtung aus Al₂O₃ und SiO₂ mit einem Brechungsindexgradient von innen nach außen, mit dem höheren Brechungsindex innen und dem niedrigeren Brechungsindex außen.

Die erfindungsgemäße Metall-, Übergangsmetall- oder Halbmetallbeschichtung ist vorzugsweise transparent, d.h. sie muss sowohl für das Anregungs- wie auch für das Emissionsspektrum der jeweils eingesetzten Konversionsleuchtstoffe eine 90 %ige bis 100 %ige Transparenz gewährleisten. Andererseits kann die Transparenz der erfindungsgemäßen Beschichtung für alle Wellenlängen, die nicht den Anregungs- und Emissionswellenlängen entsprechen auch weniger als 90 % bis 100 % betragen.

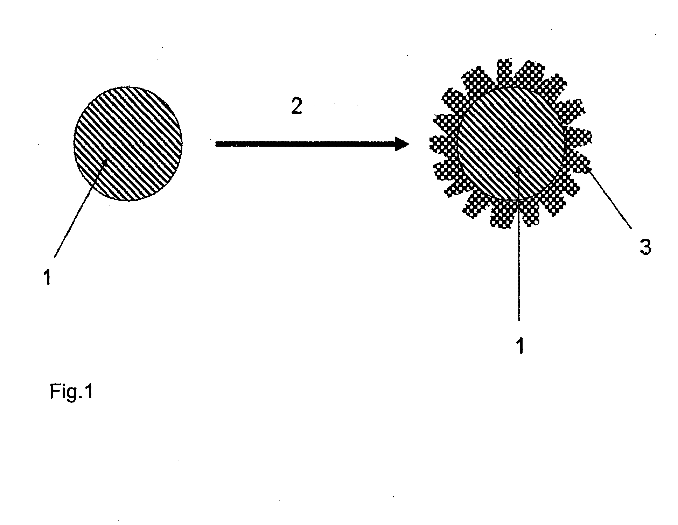

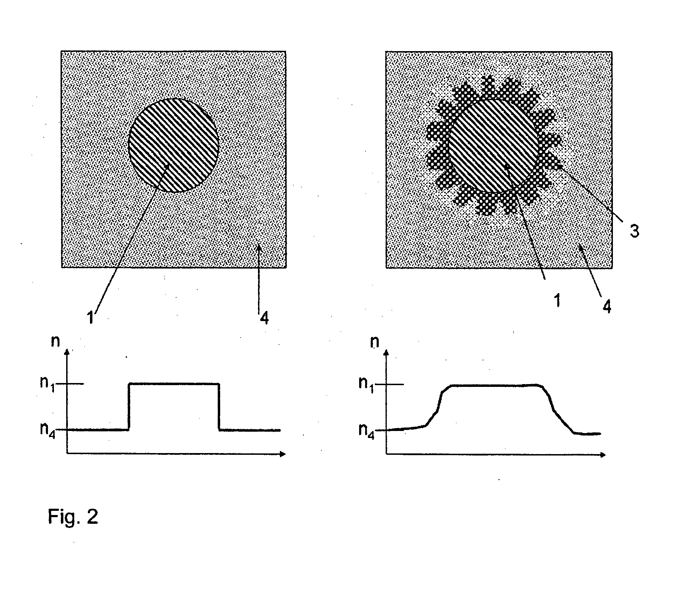

Das dadurch entstehende erfindungsgemäße Leuchtstoffmaterial weist durch die nach außen hin zunehmende Porosität in der Beschichtung eine mit zunehmender Entfernung von der Oberfläche des ursprünglichen Leuchtstoffes abnehmende effektive Brechzahl auf (siehe Fig. 1 und 2). Die Brechzahl nimmt dabei stetig ab vom Wert der Bulk-Brechzahl des ursprünglichen Leuchtstoffes bis zur Brechzahl des Bindemittels (z.B. Epoxy- oder Silikonharz), in dem das neue Leuchtstoffmaterial suspendiert ist. Dabei treten keine Brechzahlsprünge auf, so dass die Lichtstreuung beim Übergang durch die Grenzfläche Bindemittel- neues Leuchtstoffmaterial verringert wird. Ein- und austretendes Licht sieht dann keine scharfe Phasengrenze mehr, an der eine Reflexion stattfinden kann (siehe Fig. 2).

Unter dem Begriff "Porosität bzw. porös" versteht man die mittlere Porenöffnung an der Oberfläche eines Materials. Die erfindungsgemäße beschichtete Leuchtstoffoberfläche ist vorzugsweise meso- oder makroporös, wobei "mesoporös" eine Porenöffnung zwischen 2 bis 50 nm und "makroporös" eine Porengröße > 50 nm beschreibt.

Diese porösen Beschichtungen bieten außerdem die Möglichkeit, den Brechungsindex einer Einfachschicht weiter zu reduzieren.

Die Partikelgröße der erfindungsgemäßen Leuchtstoffe beträgt zwischen 50 nm und 40 µm, vorzugsweise zwischen 1 µm und 20 µm.

Die Dicke der erfindungsgemäßen Beschichtung beträgt zwischen 10 nm und 200 nm, vorzugsweise 15 nm und 100 nm. Die Teilchengröße der Primärpartikel der Metall-, Übergangsmetall- oder Halbmetalloxid-Beschichtung beträgt zwischen 5 nm und 50 nm.

In einer anderen bevorzugten Ausführungsform besteht die erfindungsgemäße Metall- , Übergangsmetall- oder Halbmetalloxid-Beschichtung aus wenigstens zwei Komponenten A und B unterschiedlicher Brechzahl. Die Schicht ist so aufgebaut, dass sich ein Brechzahlgradient von innen nach außen ergibt, mit der höheren Brechzahl innen und der niedrigeren Brechzahl außen. Eine solche Beschichtung besteht an der Oberfläche des Leuchtstoffpartikels im Wesentlichen aus dem Stoff A mit der höheren Brechzahl, auf der Außenseite der Beschichtung im Wesentlichen aus dem Stoff B mit der niedrigeren Brechzahl. Dazwischen liegt eine Mischung aus A und B vor mit einem Gradienten der Zusammensetzung.

Weitere Beispiele für A und B sind neben der obligatorischen Zusammensetzung Al₂O₃ und SiO₂, ZnO und SiO₂ oder ZrO₂ und SiO₂

Beispiele für Mischungen aus mehr als zwei Komponenten sind ZnO₂, Al₂O₃ und SiO₂ oder TiO₂; Al₂O₃ und SiO₂. Die Beschichtung kann als Mischfällung der Komponenten oder alternierendes Fällen der Komponenten aufgebracht werden.

Die optimale Brechzahl für die Beschichtung errechnet sich nach der Formel n = √n₁*n₂, wobei n₁ die Brechzahl des Leuchtstoffs und n₂ die des Bindemittels ist. Eine solche Schicht besteht beispielsweise aus einer Mischung aus Aluminiumoxid und SiO₂. Über das Verhältnis der hoch- und niedrigbrechenden Komponenten lässt sich die Brechzahl der Beschichtung steuern.

Die Beschichtung der Leuchtstoffpartikel erfolgt vorzugsweise nasschemisch durch Auffällen der Metalloxide oder Hydroxide in wässriger Suspension. Dazu wird der unbeschichtete Leuchtstoff in einem Reaktor in Wasser suspendiert und durch gleichzeitiges Zudosieren eines Metallsalzes und eines Fällungsmittels unter Rühren mit dem Metalloxid oder Hydroxid beschichtet.

Alternativ zu Metallsalzen können auch metallorganische Verbindungen, z.B. Metallalkoholate, zudosiert werden, die dann durch hydrolytische Zersetzung Metalloxide oder -hydroxide bilden. Ein anderer möglicher Weg zur Beschichtung der Partikel ist die Beschichtung über einen Sol-Gel-Prozess in einem organischen Lösungsmittel wie beispielsweise Ethanol oder Methanol. Dieses Verfahren eignet sich besonders für wasserempfindliche Materialien sowie für säure- oder alkaliempfindliche Stoffe.

Ein weiterer Gegenstand der vorliegenden Erfindung ist daher ein Verfahren zur Herstellung von beschichteten Leuchtstoffpartikeln mit mindestens einer Beschichtung aus Al₂O₃ und SiO₂ gekennzeichnet durch die Schritte:
a. Herstellen einer vorkalzinierten Leuchtstoffprecursor-Suspension durch Mischen von mindestens zwei Edukten und mindestens einem Dotierstoff und thermisch behandelt bei einer Temperatur T₁>150 °C.
b. die vorkalzinierte Leuchtstoffprecursor-Mischung wird anschließend bei einer Temperatur T₂>800 °C zu Leuchtstoffpartikeln kalziniert.
c. Beschichtung der Leuchtstoffpartikel mit mindestens einem, vorzugsweise weitgehend transparenten, Metall-, Übergangsmetall- oder Halbmetalloxid in einem nasschemischen Prozess und anschließende Kalzinierung.

Die Edukte zur Herstellung des Leuchtstoffs bestehen, wie oben erwähnt, aus dem Basismaterial (z. B. Salzlösungen des Aluminiums, Yttriums und Cer) sowie mindestens einem Dotierstoff, vorzugsweise Europium oder Cer und gegebenenfalls weiteren Gd-, Lu-, Sc-, Sm-, Tb-, Pr- und/oder Gahaltigen Materialien. Als Edukte kommen anorganische und/oder organische Stoffe wie Nitrate, Carbonate, Hydrogencarbonate, Phosphate, Carboxylate, Alkoholate, Acetate, Oxalate, Halogenide, Sulfate, metallorganische Verbindungen, Hydroxide und/oder Oxide der Metalle, Halbmetalle, Übergangsmetalle und/oder Seltenerden in Frage, welche in anorganischen und/oder organischen Flüssigkeiten gelöst und/oder suspendiert sind. Vorzugsweise werden Mischnitratlösungen, Chlorid- oder Hydroxidlösungen eingesetzt, welche die entsprechenden Elemente im erforderlichen stöchiometrischen Verhältnis enthalten.

Als weitgehend transparente Oxide für die Beschichtung werden vorzugsweise Aluminiumoxid, Zinkoxid, Titandioxid, Zirkoniumoxid oder Siliziumoxid oder Kombinationen davon eingesetzt. Besonders bevorzugt wird Aluminiumoxid eingesetzt.

Die nasschemische Herstellung besitzt gegenüber der herkömmlichen Festkörperdiffusions-Methode (engl. mixing and firing) generell den Vorteil, dass die resultierenden Materialien eine höhere Einheitlichkeit in Bezug auf die stöchiometrische Zusammensetzung, die Partikelgröße und die Morphologie der Partikel aufweisen, aus denen der erfindungsgemäße Leuchtstoff hergestellt wird.

Für die nasschemische Vorbehandlung einer wässrigen Vorstufe der Leuchtstoffe (= Leuchtstoffprecursoren) bestehend z.B. aus einem Gemisch von Yttriumnitrat-, Aluminiumnitrat- und Cernitratlösung sind folgende bekannte Methoden bevorzugt:
- Cofällung mit einer NH₄HCO₃-Lösung (*siehe z.B.* Jander, Blasius Lehrbuch der analyt. u. präp. anorg. Chem. 2002)
- Pecchini-Verfahren mit einer Lösung aus Zitronensäure und Ethylenglykol (*siehe z.B.* Annual Review of Materials Research Vol. 36: 2006, 281-331)
- Combustion-Verfahren unter Verwendung von Harnstoff
- Sprühtrocknung wässriger oder organischer Salzlösungen (Edukte)
- Sprühpyrolyse (auch Spraypyrolyse genannt) wässriger oder organischer Salzlösungen (Edukte)

Bei der o.g. erfindungsgemäß besonders bevorzugten Cofällung werden z.B. Chlorid- oder Nitratlösungen der entsprechenden Leuchtstoffedukte mit einer NH₄HCO₃-Lösung versetzt, wodurch sich der Leuchtstoffprecursor bildet.

Beim Pecchini-Verfahren werden z.B. die o.g. Nitratlösungen der entsprechenden Leuchtstoffedukte bei Raumtemperatur mit einem Fällungsreagenz bestehend aus Zitronensäure und Ethylenglykol versetzt und anschließend erhitzt. Durch Erhöhung der Viskosität kommt es zur Leuchtstoffprecursor-Bildung.

Beim bekannten Combustion-Verfahren werden z.B. die o.g. Nitratlösungen der entsprechenden Leuchtstoffedukte in Wasser gelöst, dann unter Rückfluss gekocht und mit Harnstoff versetzt, wodurch sich der Leuchtstoffprecursor langsam bildet.

Die Sprühpyrolyse gehört zu den Aerosolverfahren, die durch Versprühen von Lösungen, Suspensionen oder Dispersionen in einen durch unterschiedliche Art und Weise erhitzten Reaktionsraum (Reaktor) sowie die Bildung und Abscheidung von Feststoff- Partikeln gekennzeichnet sind. Im Gegensatz zur Sprühtrocknung mit Heißgastemperaturen < 200°C. finden bei der Sprühpyrolyse als Hochtemperatur- Prozess außer der Verdampfung des Lösungsmittels zusätzlich die thermische Zersetzung der verwendeten Edukte (z. B. Salze) sowie die Neubildung von Stoffen (z. B. Oxide, Mischoxide) statt.

Die o.g. 5 Verfahrensvarianten sind ausführlich in der WO 2007/004488 (Merck) beschrieben, die voll umfänglich in den Kontext der vorliegenden Anmeldung durch Bezugnahme eingefügt wird.

Die Herstellung der erfindungsgemäßen Leuchtstoffe kann nach verschiedenen nasschemischen Methoden erfolgen, indem
1) eine homogene Ausfällung der Bestandteile erfolgt, gefolgt von der Abtrennung des Lösemittels und einer ein- oder mehrstufigen thermischen Nachbehandlung, wobei ein Schritt davon in reduzierender Atmosphäre erfolgen kann,
2) die Mischung fein verteilt wird, beispielsweise mit Hilfe eines Sprühprozesses und eine Entfernung des Lösemittels erfolgt, gefolgt von einer ein -oder mehrstufigen thermischen Nachbehandlung, wobei ein Schritt davon in reduzierender Atmosphäre erfolgen kann, oder
3) die Mischung fein verteilt wird, beispielsweise mit Hilfe eines Sprühprozesses und eine Entfernung des Lösemittels einhergehend mit einer Pyrolyse erfolgt, gefolgt von einer ein- oder mehrstufigen thermischen Nachbehandlung, wobei ein Schritt davon in reduzierender Atmosphäre erfolgen kann.
4) die mit Hilfe der Methoden 1-3 hergestellten Leuchtstoffe nachträglich nasschemisch beschichtet werden.

Vorzugsweise geschieht die nasschemische Herstellung des Leuchtstoffes nach dem Präzipitations- und/oder Sol-Gel-Verfahren.

Bei der oben genannten thermischen Nachbehandlung ist es bevorzugt, wenn die Glühung zumindest teilweise unter reduzierenden Bedingungen (z.B. mit Kohlenmonoxid, Formiergas, reinem Wasserstoff, Mischungen aus Wasserstoff mit einem Inertgas oder zumindest Vakuum oder Sauerstoffmangel-Atmosphäre) durchgeführt wird.

Generell ist es auch möglich, die erfindungsgemäßen unbeschichteten Leuchtstoffe über die Festkörperdiffusions-Methode herzustellen, was jedoch die schon erwähnten Nachteile verursacht.

Mit Hilfe der oben genannten Verfahren können beliebige äußere Formen der Leuchtstoffpartikel hergestellt werden, wie sphärische Partikel, Plättchen und strukturierte Materialien und Keramiken.

Die Anregbarkeit der erfindungsgemäßen Leuchtstoffe erstreckt sich zudem über einen weiten Bereich, der von etwa 250 nm bis 560 nm, bevorzugt 380 nm bis zu etwa 500 nm reicht. Damit sind diese Leuchtstoffe zur Anregung durch UV oder blau emittierende Primärlichtquellen wie LEDs oder konventionellen Entladungslampen (z.B. auf Hg-Basis) geeignet. Ein weiterer Gegenstand der vorliegenden Erfindung ist eine Beleuchtungseinheit mit mindestens einer Primärlichtquelle, dessen Emissionsmaximum bzw. -maxima im Bereich 380 nm bis 530 nm, bevorzugt 430 nm bis zu etwa 500 nm reicht. Insbesondere bevorzugt ist ein Bereich zwischen 440 und 480 nm, wobei die primäre Strahlung teilweise oder vollständig durch die erfindungsgemäßen beschichteten Leuchtstoffe in längerwellige Strahlung konvertiert wird. Vorzugsweise ist diese Beleuchtungseinheit weiß emittierend oder emittiert Licht mit einem bestimmten Farbpunkt (Color-on-demand-Prinzip).

In einer bevorzugten Ausführungsform der erfindungsgemäßen Beleuchtungseinheit handelt es sich bei der Lichtquelle um ein lumineszentes IndiumAluminiumGalliumNitrid, insbesondere der Formel InᵢGaⱼAlₖN, wobei 0 ≤ i, 0≤j, 0≤ k, und i+j+k=1 ist.

Dem Fachmann sind mögliche Formen von derartigen Lichtquellen bekannt. Es kann sich hierbei um lichtemittierende LED-Chips unterschiedlichen Aufbaus handeln.

In einer weiteren bevorzugten Ausführungsform der erfindungsgemäßen Beleuchtungseinheit handelt es sich bei der Lichtquelle um eine lumineszente auf ZnO, TCO (Transparent conducting oxide), ZnSe oder SiC basierende Anordnung oder auch um eine auf einer organischen lichtemittierende Schicht basierende Anordnung (OLED).

In einer weiteren bevorzugten Ausführungsform der erfindungsgemäßen Beleuchtungseinheit handelt es sich bei der Lichtquelle um eine Quelle, die Elektrolumineszenz und/oder Photolumineszenz zeigt. Weiterhin kann es sich bei der Lichtquelle auch um eine Plasma- oder Entladungsquelle handeln.

Die erfindungsgemäßen Leuchtstoffe können entweder in einem Harz dispergiert (z.B. Epoxy- oder Siliconharz), direkt auf der Primärlichtquelle angeordnet werden oder aber von dieser, je nach Anwendung, entfernt angeordnet sein (letztere Anordnung schließt auch die "Remote phosphor Technologie" mit ein). Die Vorteile der "Remote phosphor Technologie" sind dem Fachmann bekannt und z.B. der folgenden Publikation zu entnehmen: Japanese Journ. of Appl. Phys. Vol 44, No. 21 (2005). L649-L651.

In einer weiteren Ausführungsform ist es bevorzugt, wenn die optische Ankopplung der Beleuchtungseinheit zwischen dem beschichteten Leuchtstoff und der Primärlichtquelle durch eine lichtleitende Anordnung realisiert wird.

Dadurch ist es möglich, dass an einem zentralen Ort die Primärlichtquelle installiert wird und diese mittels lichtleitender Vorrichtungen, wie beispielsweise lichtleitenden Fasern, an den Leuchtstoff optisch angekoppelt ist. Auf diese Weise lassen sich den Beleuchtungswünschen angepasste Leuchten lediglich bestehend aus einem oder unterschiedlichen Leuchtstoffen, die zu einem Leuchtschirm angeordnet sein können, und einem Lichtleiter, der an die Primärlichtquelle angekoppelt ist, realisieren. Auf diese Weise ist es möglich, eine starke Primärlichtquelle an einen für die elektrische Installation günstigen Ort zu platzieren und ohne weitere elektrische Verkabelung, sondern nur durch Verlegen von Lichtleitern an beliebigen Orten Leuchten aus Leuchtstoffen, welche an die Lichtleiter gekoppelt sind, zu installieren.

Ein weiterer Gegenstand der vorliegenden Erfindung ist die Verwendung der erfindungsgemäßen Leuchtstoffe zur teilweisen oder vollständigen Konversion der blauen oder im nahen UV-liegenden Emission einer Lumineszenzdiode.

Weiterhin bevorzugt ist die Verwendung der erfindungsgemäßen Leuchtstoffe zur Konversion der blauen oder im nahen UV-liegenden Emission in sichtbare weiße Strahlung. Weiterhin ist die Verwendung der erfindungsgemäßen Leuchtstoffe zur Konversion der Primärstrahlung in einen bestimmten Farbpunkt nach dem "Color on demand"- Konzept bevorzugt.

Ein weiterer Gegenstand der vorliegenden Erfindung ist die Verwendung der erfindungsgemäßen Leuchtstoffe in Elektrolumineszenz-Materialien, wie beispielsweise Elektrolumineszenz-Folien (auch Leuchtfolien oder Lichtfolien genannt), in denen beispielsweise Zinksulfid oder Zinksulfid dotiert mit Mn²⁺, Cu⁺, oder Ag⁺ als Emitter eingesetzt wird, die im gelbgrünen Bereich emittieren. Die Anwendungsbereiche der Elektrolumineszenz-Folie sind z.B. Werbung, Displayhintergrundbeleuchtung in Flüssigkristallbildschirmen (LC-Displays) und Dünnschichttransistor-Displays (TFT-Displays), selbstleuchtende KFZ-Kennzeichenschilder, Bodengrafik (in Verbindung mit einem tritt- und rutschfesten Laminat), in Anzeigen- und/oder Bedienelementen beispielsweise in Automobilen, Zügen, Schiffen und Flugzeugen oder auch Haushalts-, Garten-, Mess- oder Sport- und Freizeitgeräten.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

### Beispiele

### Vergleichsbeispiel 1: Beschichtung von Rubinplättchen Al_{1.99}O₃:Cr_{0.009} mit Aluminiumoxid

In 450 ml entionisierten Wasser werden 223.8 g Aluminiumsulfat-18-hydrat, 114.5 g Natriumsulfat, 93.7 g Kaliumsulfat und 2.59 g KCr(SO₄)₂ x 12H₂O (Chromalaun) bei etwa 75 °C gelöst. Zu diesem Gemisch werden 2.0 g einer 34.4 % Titansulfat-Lösung zugefügt, woraus die wässrige Lösung (a) resultiert.

In 250 ml entionisiertem Wasser werden 0.9 g tert. Natriumphosphat-12 hydrat und 107.9 g Natriumcarbonat gelöst, woraus die wässrige Lösung (b) entsteht.

Die beiden wässrigen Lösungen (a) und (b) werden gleichzeitig zu 200 ml entionisiertem Wasser unter Rühren innerhalb 15 Min. gegeben. Es wird weitere 15 Min. gerührt.

Die entstehende Lösung wird bis zur Trockene eingedampft und an Luftatmosphäre bei einer Temperatur von 800 °C über eine Stunde behandelt, sodass die Rubinplättchen resultieren.

In einem Glasreaktor mit Heizmantel werden 75 g eines Filterkuchens, der 50 g chromdotierte Aluminiumoxidpartikel (Ruby-Leuchtstoffe) und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, in 2½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

Ohne weitere Behandlung zerfällt das Produkt in ein feines Pulver, das in kurzer Zeit praktisch rückstandslos durch das Sieb fällt.

Man erhält 61 g des beschichteten Leuchtstoffs, ca. 98% d. Th.

### Vergleichsbeispiel 2: Beschichtung von Rubinplättchen Al_{1.991}O₃:Cr_{0.009} mit Aluminiumoxid und Siliciumoxid

In einem Glasreaktor mit Heizmantel werden 75 g eines Filterkuchens, der 50 g chromdotierte Aluminiumoxidpartikel (Ruby-Leuchtstoffe) und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, mit einer Rate von 4 ml/min zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird der pH auf 7,5 gestellt und es werden 80 g Natronwasserglas (eingestellt auf 12,5 Gew. % SiO₂) mit 0,75 ml/min zudosiert. Der pH-Wert wird dabei mit Salzsäure konstant gehalten. Nach der Zudosierung von Wasserglas wird eine Stunde bei der Fällungstemperatur nachgerührt und auf Raumtemperatur abgekühlt. Das erhaltene Produkt wird abfiltriert, mit Wasser gewaschen und getrocknet. Der getrocknete Leuchtstoff wird abschließend 30 min bei 750 °C geglüht und abschließend über ein 50µ-Sieb gesiebt.

Ohne weitere Behandlung zerfällt das Produkt in ein feines Pulver, das in kurzer Zeit praktisch rückstandslos durch das Sieb fällt.

Man erhält 70 g Leuchtstoff, ca. 96,5% d. Th.

### Vergleichsbeispiel 3: Beschichtung von Rubinplättchen Al_{1.991}O₃:Cr_{0.009} mit Silica

50 g des Produktes aus Beispiel 1 werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH3) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert. Der Rückstand wird mit Ethanol gewaschen, getrocknet, anschließend geglüht und gesiebt.

Man erhält 63 g (ca. 98% d. Th.) eines matten Pulver von blaßvioletter Farbe.

### Vergleichsbeispiel 4: Beschichtung des Leuchtstoffes YAG:Ce mit Aluminiumoxid

In einem Glasreaktor mit Heizmantel werden 75 g eines Filterkuchens, der 50 g YAG:Ce und 25 g Restfeuchte enthält, in 925 g VE-Wasser suspendiert. Zu der Suspension werden unter Rühren bei 80 °C 600g einer wässrigen Lösung von 98,7 g AlCl₃ *6H₂O pro Kg Lösung enthält, in 2½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

### Vergleichsbeispiel 5: Beschichtung des Leuchtstoffes (Ca,Sr,Ba)SiN₂:Eu mit Aluminiumoxid

In einem Glasreaktor mit Heizmantel werden 75 g eines Filterkuchens, der 50 g (Ca,Sr,Ba)SiN₂:Eu und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, in 2½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

### Vergleichsbeispiel 6 : Beschichtung des Leuchtstoffes (Ca,Sr,Ba)₂Si₂N₈ :Eu mit Aluminiumoxid

In einem Glasreaktor mit Heizmantel werden 75 g eines Filterkuchens, der 50 g (Ca,Sr,Ba)₂Si₂N₈ :Eu und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, in 2 ½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

### Vergleichsbeispiel 7: Beschichtung des Leuchtstoffes YAG:Ce mit SiO₂

50 g des YAG:Ce werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH₃) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert.

Der Rückstand wird mit Ethanol gewaschen, getrocknet, anschließend geglüht und gesiebt.

### Vergleichsbeispiel 8: Beschichtung des Leuchtstoffes (Ca,Sr,Ba)SiN₂:Eu mit SiO₂

50 g (Ca,Sr,Ba)SiN₂:Eu werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH₃) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert. Der Rückstand wird mit Ethanol gewaschen, getrocknet, anschließend geglüht und gesiebt.

### Vergleichsbeispiel 9: Beschichtung des Leuchtstoffes (Ca,Sr,Ba)₂Si₅N₈:Eu mit SiO₂

50 g des (Ca,Sr,Ba)₂Si₅N₈:Eu werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH₃) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert. Der Rückstand wird mit Ethanol gewaschen, getrocknet, anschließend geglüht und gesiebt.

### Beispiel 1 : Beschichtung des Leuchtstoffes YAG:Ce mit einer Mischung aus Al₂O₃ und SiO₂

In einem Glasreaktor mit Heizmantel werden 75 g eines Filterkuchens, der 50 g YAG:Ce und 25 g Restfeuchte enthält, in 925 g VE-Wasser suspendiert. Zu der Suspension werden unter Rühren bei 80 °C 600g einer wässrigen Lösung von 98,7 g AlCl₃ *6H₂O pro Kg Lösung enthält, mit einer Rate von 4 ml/min zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird der pH auf 7,5 gestellt und es werden 80 g Natronwasserglas (eingestellt auf 12,5 Gew. % SiO₂) mit 0,75 ml/min zudosiert. Der pH-Wert wird dabei mit Salzsäure konstant gehalten. Nach der Wasserglaszudosierung wird eine Stunde bei der Fällungstemperatur nachgerührt, auf Raumtemperatur abgekühlt. Das erhaltene Produkt wird abfiltriert, mit Wasser gewaschen und getrocknet. Der getrocknete Leuchtstoff wird abschließend 30 min bei 750 °C geglüht und abschließend über ein 50µ-Sieb gesiebt.

### Beispiel 2: Beschichtung des Leuchtstoffes (Ca,Sr,Ba)SiN₂:Eu mit einer Mischung aus Al₂O₃ und SiO₂

In einem Glasreaktor mit Heizmantel werden 75 g eines Filterkuchens, der 50 g (Ca,Sr,Ba)SiN₂:Eu und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, mit einer Rate von 4 ml/min zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird der pH auf 7,5 gestellt und es werden 80 g Natronwasserglas (eingestellt auf 12,5 Gew. % SiO₂) mit 0,75 ml/min zudosiert. Der pH-Wert wird dabei mit Salzsäure konstant gehalten. Nach der Wasserglaszudosierung wird eine Stunde bei der Fällungstemperatur nachgerührt, auf Raumtemperatur abgekühlt. Das erhaltene Produkt wird abfiltriert, mit Wasser gewaschen und getrocknet. Der getrocknete Leuchtstoff wird abschließend 30 min bei 750 °C geglüht und abschließend über ein 50µ-Sieb gesiebt.

### Beispiel 3: Beschichtung des Leuchtstoffes (Ca,Sr,Ba)₂Si₅N₈:Eu mit einer Mischung aus Al₂O₃ und SiO₂

In einem Glasreaktor mit Heizmantel werden 75 g eines Filterkuchens, der 50 g (Ca,Sr,Ba)₂Si₅N₈:Eu und 25 g Restfeuchte enthält, in 925 g VE-Wasser suspendiert. Zu der Suspension werden unter Rühren bei 80 °C 600g einer wässrigen Lösung von 98,7 g AlCl₃*6H₂O pro Kg Lösung enthält, mit einer Rate von 4 ml/min zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird der pH auf 7,5 gestellt und es werden 80 g Natronwasserglas (eingestellt auf 12,5 Gew. % SiO₂) mit 0,75 ml/min zudosiert. Der pH-Wert wird dabei mit Salzsäure konstant gehalten. Nach der Wasserglaszudosierung wird eine Stunde bei der Fällungstemperatur nachgerührt, auf Raumtemperatur abgekühlt. Das erhaltene Produkt wird abfiltriert, mit Wasser gewaschen und getrocknet. Der getrocknete Leuchtstoff wird abschließend 30 min bei 750 °C geglüht und abschließend über ein 50µ-Sieb gesiebt.

### Beschreibung der Figuren

Im Folgenden soll die Erfindung anhand mehrerer Ausführungsbeispiele näher erläutert werden. Es zeigen:
Fig. 1: das Leuchtstoffpartikel (1) wird in einem nasschemischen Verfahren (2) mit einer nach außen hin poröser werdenden Beschichtung (3) versehen. Die Gesamtheit aus (1) + (3) stellt das neue Leuchtstoffmaterial dar.
Fig. 2: links der unbeschichtete Leuchtstoff (1) in der Harzmatrix (4); im Falle von gebräuchlichem Silikonharz mit der Brechzahl n = 1,38 bis 1,5 entsteht an der Grenzfläche zwischen Harz und Leuchtstoff ein Brechzahlsprung vom niedrigbrechenden Harz (n₄) zum hochbrechenden Leuchtstoff (n₁). Das führt dazu, dass an der Grenzfläche ein großer Anteil des anregenden Lichtes gestreut wird und ein großer Anteil des im Leuchtstoff entstehenden Lichtes in der Auskopplung behindert wird wegen Totalreflektion. Im rechten Teil ist das erfindungsgemäße, neue Leuchtstoffmaterial skizziert: das neue Leuchtstoffmaterial entsteht aus dem Leuchtstoff (1), indem über chemische Verknüpfungen eine poröse Beschichtung (3) an die Oberfläche fest angebunden wird. Die Beschichtung bewirkt, dass ein allmählicher Übergang zwischen der Brechzahl des hochbrechenden Leuchtstoffes (n₁) und der Brechzahl des niedrig brechenden Harzes (n₄) stattfindet. Dadurch wird weniger Anregungslicht gestreut und die Totalreflektion wird verringert. D.h. der Leuchtstoff kann mehr Licht absorbieren und mehr Fluoreszenzlicht auskoppeln.

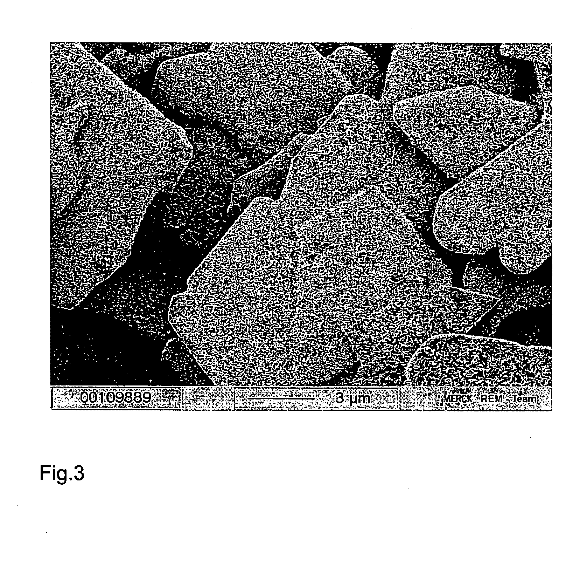

Fig.3: zeigt eine REM-Aufnahme eines mit Alumina beschichteten Leuchtstoffes Al₂O₃:Cr³⁺ mit poröser Oberfläche

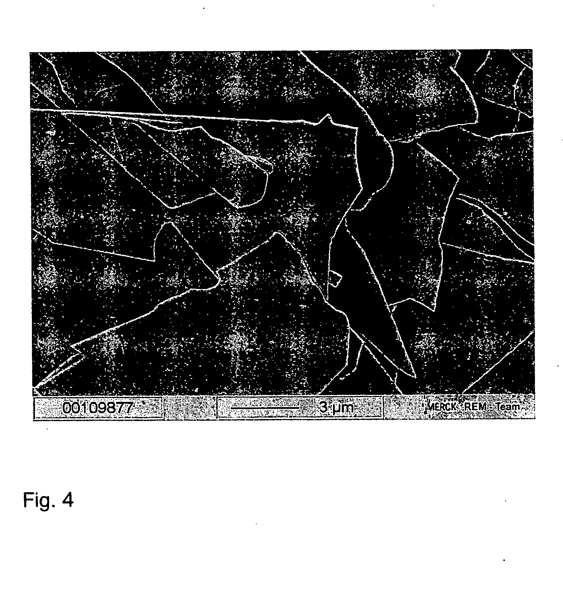

Fig. 4: zeigt eine REM-Aufnahme eines Leuchtstoffes Al₂O₃:Cr³⁺ beschichtet mit einer Mischfällung aus Al₂O₃ und SiO₂ mit einem Brechzahlgradienten von reinem Aluminiumoxid (ca. 1,78) auf SiO₂ (ca. 1,4).

## Patentansprüche

1. Beschichtete Leuchtstoffpartikel mit poröser Oberfläche aus Meso- und/oder Makroporen enthaltend lumineszierende Teilchen aus Y₃Al₅O₁₂:Ce, (Ca,Sr,Ba)₂Si₅N₈:Eu oder (Ca,Sr,Ba)SiN₂:Eu und mindestens einer Beschichtung aus Al₂O₃ und SiO₂ mit einem Brechungsindexgradient von innen nach außen, mit dem höheren Brechungsindex innen und dem niedrigeren Brechungsindex außen.

2. Beschichtete Leuchtstoffpartikel nach Anspruch 1, **dadurch gekennzeichnet, dass** die Mesoporen eine Porenöffnung zwischen 2 und 50 nm und die Makroporen eine Porenöffnung > 50 nm besitzen.

3. Beschichtete Leuchtstoffpartikel nach Anspruch 1 oder 2, **dadurch gekennzeichnet, dass** die Beschichtung 90 bis 100% transparent ist.

4. Verfahren zur Herstellung von beschichteten Leuchtstoffpartikeln nach einem oder mehreren der Ansprüche 1 bis 3, **gekennzeichnet durch** die Schritte:
a) Herstellen einer vorkalzinierten Leuchtstoffprecursor-Suspension durch Mischen von mindestens zwei Edukten und mindestens einem Dotierstoff und Cofällung mit einer NH₄HCO₃-Lösung sowie Trocknung bei einer Temperatur T₁>150 °C
b) die vorkalzinierte Leuchtstoffprecursor-Mischung wird anschließend bei einer Temperatur T₂≥800 °C zu Leuchtstoffpartikeln kalziniert.
c) Beschichtung der Leuchtstoffpartikel mit mindestens einer Beschichtung aus Al₂O₃ und SiO₂ **durch** einen nasschemischen Prozess.
d) Kalzinierung der beschichteten Leuchtstoffpartikel bei T₃≤750 °C.

5. Verfahren nach Anspruch 4, **dadurch gekennzeichnet, dass** die Al₂O₃- und/oder SiO₂-Beschichtung 90 bis 100% transparent ist.

6. Verfahren nach Anspruch 4 oder 5, **dadurch gekennzeichnet, dass** die Edukte und der Dotierstoff anorganische und/oder organische Stoffe wie Nitrate, Carbonate, Hydrogencarbonate, Phosphate, Carboxylate, Alkoholate, Acetate, Oxalate, Halogenide, Sulfate, metallorganische Verbindungen, Hydroxide und/oder Oxide der Metalle, Halbmetalle, Übergangsmetalle und /oder Seltenerden sind, welche in anorganischen und/oder organischen Flüssigkeiten gelöst und/oder suspendiert sind.

7. Beleuchtungseinheit mit mindestens einer Primärlichtquelle, deren Emissionsmaximum im Bereich 250 nm bis 530 nm liegt, vorzugsweise zwischen 380 nm und 500 nm, wobei diese Strahlung teilweise oder vollständig in längerwellige Strahlung konvertiert wird durch beschichtete Leuchtstoffpartikel nach einem oder mehreren der Ansprüche 1 bis 3.

8. Beleuchtungseinheit nach Anspruch 7, **dadurch gekennzeichnet, dass** es sich bei der Primärlichtquelle um ein lumineszentes IndiumAluminiumGalliumNitrid, insbesondere der Formel InᵢGaⱼAlₖN, wobei 0≤i, 0≤j, 0≤k, und i+j+k=1 handelt.

9. Beleuchtungseinheit nach Anspruch 7, **dadurch gekennzeichnet, dass** es bei der Primärlichtquelle um eine lumineszente auf ZnO, TCO (Transparent conducting oxide), ZnSe oder SiC basierende Verbindung handelt.

10. Beleuchtungseinheit nach Anspruch 7, **dadurch gekennzeichnet, dass** es sich bei der Primärlichtquelle um eine auf einer organischen lichtemittierenden Schicht basierendes Material handelt.

11. Beleuchtungseinheit nach Anspruch 7, **dadurch gekennzeichnet, dass** es sich bei der Primärlichtquelle um eine Quelle handelt, die Elektrolumineszenz und/oder Photolumineszenz zeigt.

12. Beleuchtungseinheit nach Anspruch 7, **dadurch gekennzeichnet, dass** es sich bei der Primärlichtquelle um eine Plasma- oder Entladungsquelle handelt.

13. Verwendung von beschichteten Leuchtstoffpartikeln nach einem oder mehreren der Ansprüche 1 bis 3 zur teilweisen oder vollständigen Konversion der blauen oder im nahen UV-liegenden Emission einer Lumineszenzdiode.

## Claims

1. Coated phosphor particles having a porous surface comprising meso- and/or macropores comprising luminescent particles comprising Y₃Al₅O₁₂:Ce, (Ca,Sr,Ba)₂Si₅N₈:Eu or (Ca,Sr,Ba)SiN₂:Eu and at least one coating comprising Al₂O₃ and SiO₂ having a refractive index gradient from inside to outside, with the higher refractive index on the inside and the lower refractive index on the outside.

2. Coated phosphor particles according to Claim 1, **characterised in that** the mesopores have a pore opening between 2 and 50 nm and the macropores have a pore opening > 50 nm.

3. Coated phosphor particles according to Claim 1 or 2, **characterised in that** the coating is 90 to 100% transparent.

4. Process for the production of coated phosphor particles according to one or more of Claims 1 to 3, **characterised by** the steps:
a) preparation of a pre-calcined phosphor precursor suspension by mixing at least two starting materials and at least one dopant and co-precipitation with an NH₄HCO₃ solution and drying at a temperature T₁>150°C
b) the pre-calcined phosphor precursor mixture is subsequently calcined at a temperature T₂≥800°C to give phosphor particles
c) coating of the phosphor particles with at least one coating comprising Al₂O₃ and SiO₂ by a wet-chemical process
d) calcination of the coated phosphor particles at T₃≤750°C.

5. Process according to Claim 4, **characterised in that** the Al₂O₃ and/or SiO₂ coating is 90 to 100% transparent.

6. Process according to Claim 4 or 5, **characterised in that** the starting materials and the dopant are inorganic and/or organic substances, such as nitrates, carbonates, hydrogencarbonates, phosphates, carboxylates, alcoholates, acetates, oxalates, halides, sulfates, organometallic compounds, hydroxides and/or oxides of the metals, semi-metals, transition metals and/or rare earths, which are dissolved and/or suspended in inorganic and/or organic liquids.

7. Lighting unit having at least one primary light source whose emission maximum is in the range 250 nm to 530 nm, preferably between 380 nm and 500 nm, where some or all of this radiation is converted into longer-wavelength radiation by coated phosphor particles according to one or more of Claims 1 to 3.

8. Lighting unit according to Claim 7, **characterised in that** the primary light source is a luminescent indium aluminium gallium nitride, in particular of the formula InᵢGaⱼAlₖN, where 0≤i, 0≤j, 0≤k, and i+j+k=1.

9. Lighting unit according to Claim 7, **characterised in that** the primary light source is a luminescent compound based on ZnO, TCO (transparent conducting oxide), ZnSe or SiC.

10. Lighting unit according to Claim 7, **characterised in that** the primary light source is a material based on an organic light-emitting layer.

11. Lighting unit according to Claim 7, **characterised in that** the primary light source is a source which exhibits electroluminescence and/or photoluminescence.

12. Lighting unit according to Claim 7, **characterised in that** the primary light source is a plasma or discharge source.

13. Use of coated phosphor particles according to one or more of Claims 1 to 3 for the partial or complete conversion of the blue or near-UV emission from a luminescent diode.

## Revendications

1. Particules de phosphore revêtues comportant une surface poreuse comprenant des mésopores et/ou des macropores comprenant des particules luminescentes comprenant Y₃Al₅O₁₂:Ce, (Ca,Sr,Ba)₂Si₅N₈:Eu ou (Ca,Sr,Ba)SiN₂:Eu et au moins un revêtement comprenant Al₂O₃ et SiO₂ présentant un gradient d'indices de réfraction de l'intérieur vers l'extérieur, l'indice de réfraction plus élevé étant sur l'intérieur et l'indice de réfraction plus faible étant sur l'extérieur.

2. Particules de phosphore revêtues selon la revendication 1, **caractérisées en ce que** les mésopores présentent une ouverture de pore entre 2 et 50 nm et les macropores présentent une ouverture de pore
>50 nm.

3. Particules de phosphore revêtues selon la revendication 1 ou 2, **caractérisées en ce que** le revêtement est transparent entre 90 et 100%.

4. Procédé pour la fabrication de particules de phosphore revêtues selon une ou plusieurs des revendications 1 à 3, **caractérisé par** les étapes de:
a) préparation d'une suspension de précurseur de phosphore précalciné en mélangeant au moins deux matériaux de départ et au moins un dopant et co-précipitation avec une solution de NH₄HCO₃ et séchage à une température T₁>150°C
b) le mélange de précurseur de phosphore précalciné est ensuite calciné à une température T₂≥800 °C pour obtenir des particules de phosphore
c) revêtement des particules de phosphore avec au moins un revêtement comprenant Al₂O₃ et SiO₂ au moyen d'un procédé chimique par voie humide
d) calcination des particules de phosphore revêtues à T₃≤750°C.

5. Procédé selon la revendication 4, **caractérisé en ce que** le revêtement en Al₂O₃ et/ou SiO₂ est transparent entre 90 et 100%.

6. Procédé selon la revendication 4 ou 5, **caractérisé en ce que** les matériaux de départ et le dopant sont des substances inorganiques et/ou organiques, telles que des nitrates, des carbonates, des hydrogéno-carbonates, des phosphates, des carboxylates, des alcoolates, des acétates, des oxalates, des halogénures, des sulfates, des composés organométalliques, des hydroxydes et/ou des oxydes de métaux, de semi-métaux, de métaux de transition et/ou des terres rares, qui sont dissoutes et/ou suspendues dans des liquides inorganiques et/ou organiques.

7. Unité d'éclairage comportant au moins une source de lumière primaire dont le maximum d'émission est dans la plage de 250 nm à 530 nm, de préférence entre 380 nm et 500 nm, où une certaine partie de ce rayonnement, voire la totalité, est convertie selon un rayonnement de longueurs d'onde plus longues par les particules de phosphore revêtues selon une ou plusieurs des revendications 1 à 3.

8. Unité d'éclairage selon la revendication 7, **caractérisée en ce que** la source de lumière primaire est du nitrure d'indium aluminium gallium luminescent, en particulier de la formule InᵢGaⱼAlₖN, où 0≤i, 0≤j, 0≤k, et i+j+k=1.

9. Unité d'éclairage selon la revendication 7, **caractérisée en ce que** la source de lumière primaire est un composé luminescent basé sur ZnO, TCO (oxyde conducteur transparent), ZnSe ou SiC.

10. Unité d'éclairage selon la revendication 7, **caractérisée en ce que** la source de lumière primaire est un matériau basé sur une couche d'émission de lumière organique.

11. Unité d'éclairage selon la revendication 7, **caractérisée en ce que** la source de lumière primaire est une source qui présente une électroluminescence et/ou une photoluminescence.

12. Unité d'éclairage selon la revendication 7, **caractérisée en ce que** la source de lumière primaire est une source de plasma ou de décharge.

13. Utilisation de particules de phosphore revêtues selon une ou plusieurs des revendications 1 à 3 pour la conversion partielle ou complète de l'émission de bleu ou des UV proches à partir d'une diode luminescente.
